# FASCICULE DE BREVET EUROPEEN

(11) **EP 1 791 148 B1**
(45) Date de publication et mention de la délivrance du brevet: **22.10.2008**
(21) Numéro de dépôt: 06301131.6
(22) Date de dépôt: 08.11.2006
(51) Int. Cl.: H01H 9/02

(54) **Appareillage électrique de commande d'un système de gestion domotique**
Elektrische Steuereinheit zur Hausautomatisierung
Electric control apparatus for house automation

(30) Priorité: 28.11.2005 FR 0553621
(43) Date de publication de la demande: 30.05.2007
(73) Titulaire: HAGER CONTROLS (Société par Actions Simplifiée), 67700 Saverne (FR)
(72) Inventeur: Colinmaire, Thierry, 67100 STRASBOURG (FR); Deiber, Claude, 67120 DUTTLENHEIM (FR); Schini, Jean-Claude, 67440 MARMOUTIER (FR)
(74) Mandataire: Nuss, Laurent

(56) Documents cités:
- EP-A- 0 678 885
- EP-A- 1 168 395
- EP-A- 1 469 496
- DE-A1- 10 011 160

## Description

La présente invention concerne le domaine des appareillages électriques de commande d'un système de gestion domotique de la lumière, du chauffage et des volets roulants, par exemple.

Ce type d'appareillage se présente généralement sous la forme d'un module destiné à être encastré dans un boîte murale, contenant le circuit électronique de puissance, sur lequel est montée une plaque d'habillage. Cette dernière peut être pourvue de touches de commande, de moyens de signalisation lumineux pour l'indication de l'état des dispositifs commandés, ou encore d'un porte-étiquette rétro-éclairé.

Ces appareillages connus présentent un certain nombre d'inconvénients. En effet, en cours de chantier, pour des raisons pratiques telles que la possibilité de gestion du chauffage ou de la lumière, la pose de ce type d'appareillage est en général réalisée avant la finition des murs, de sorte que pour éviter de détériorer ou de salir la plaque d'habillage, les différents intervenants retirent cette plaque d'habillage.

Or, le retrait de cette dernière met à nu le circuit électronique de puissance, ce qui a pour conséquence d'augmenter les risques d'endommagement de ce dernier, de sorte que l'appareillage devient inutilisable et qu'il est nécessaire d'installer un nouvel appareillage, engendrant des coûts supplémentaires.

De plus, une fois ladite plaque d'habillage retirée, l'appareillage n'est plus actionnable, rendant impossible la gestion des dispositifs reliés audit appareillage.

Il existe donc un besoin de disposer d'un appareillage qui puisse être installé et manipulé en phase de travaux ou de chantier sans nécessiter de précaution particulière, afin d'éviter une détérioration.

A cet effet, la présente invention a pour objet un appareillage électrique de commande d'un système de gestion domotique, destiné à être monté en saillie sur une plaque de montage ou dans une boîte d'encastrement par l'intermédiaire d'une plaque de montage, cet appareillage comportant une interface de commande et de visualisation, montée sur un circuit électronique de commande disposé dans un boîtier d'appareillage, et un module d'habillage et de commande, fixé de manière amovible sur ledit boîtier d'appareillage et constitué par un cadre et par un moyen d'actionnement comportant au moins un actionneur, appareillage caractérisé en ce qu'il comporte, en outre, un moyen de protection de l'interface de commande et de visualisation interposé entre l'interface de commande et de visualisation et le module d'habillage et de commande.

Le document EP 0 678 885 décrit un dispositif selon le préambule de la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une vue en perspective éclatée par l'avant d'un appareillage selon la présente invention, destiné à être monté dans une boîte d'encastrement ;
La figure 2 est une vue en perspective éclatée par l'arrière de l'appareillage de la figure 1 ;
La figure 3 est une vue en perspective du moyen de protection selon l'invention fixé sur l'interface de commande et de visualisation solidarisée avec une plaque de fixation ;
La figure 4 est une vue en perspective du module d'habillage et de commande selon l'invention ;
Les figures 5A et 5B sont des vues en perspective par l'avant et par l'arrière du moyen de protection selon la présente invention,
Les figures 6A et 6B sont des vues en perspective du cache selon l'invention avant et après montage sur le moyen de protection monté sur l'appareillage de la figure 1, et
La figure 7 est une vue en perspective éclatée par l'avant d'un appareillage selon la présente invention, destiné à être monté en saillie sur une plaque de montage.

Comme le montrent les figures annexées, l'appareillage 1 électrique de commande d'un système de gestion domotique est destiné à être monté en saillie sur une plaque de montage 24 ou dans une boîte d'encastrement par l'intermédiaire d'une plaque de montage. Cet appareillage 1 comporte une interface de commande et de visualisation 2, montée sur un circuit électronique de commande disposé dans un boîtier d'appareillage 3 pour son montage dans la boîte d'encastrement, et un module d'habillage et de commande 4, fixé de manière amovible sur ledit boîtier d'appareillage 3 et constitué par un cadre 5 et par un moyen d'actionnement 6 comportant au moins un actionneur 7. L'appareillage 1 est caractérisé en ce qu'il comporte, en outre, un moyen de protection 9 de l'interface de commande et de visualisation 2 interposé entre l'interface de commande et de visualisation 2 et le module d'habillage et de commande 4.

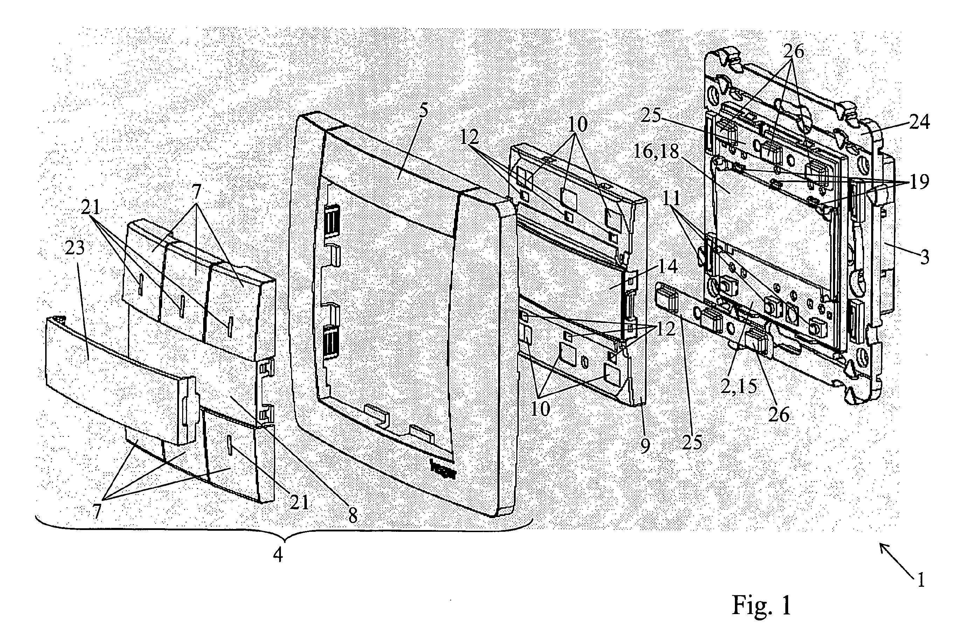

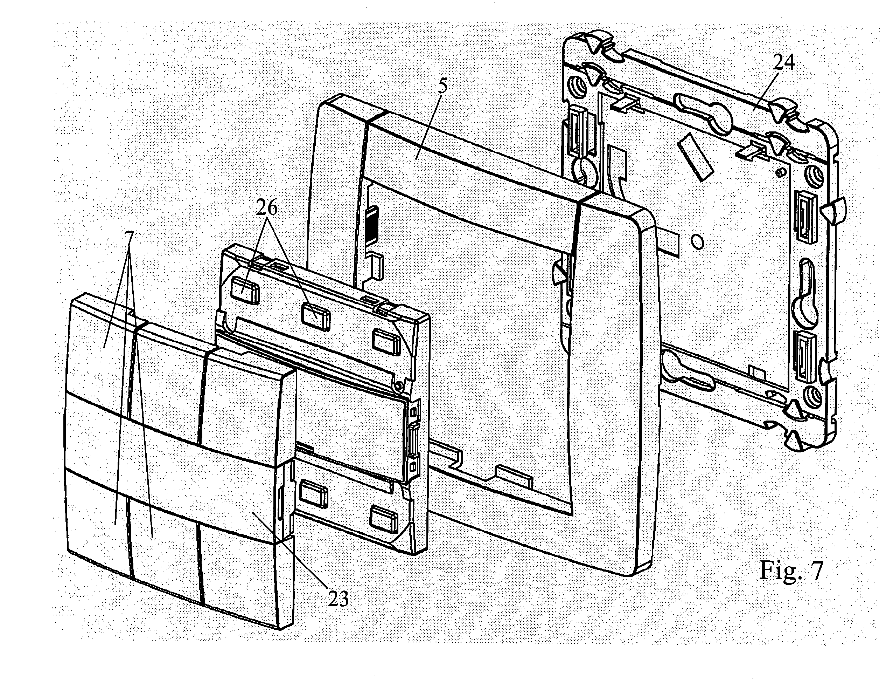

L'appareillage selon l'invention peut être monté dans une boîte d'encastrement, tel que celui représenté aux figures 1, 2 et 6, ou monté en saillie sur une plaque de montage 24, tel que celui représenté à la figure 7, qui est un appareillage sans fil, du type à ondes radiofréquences.

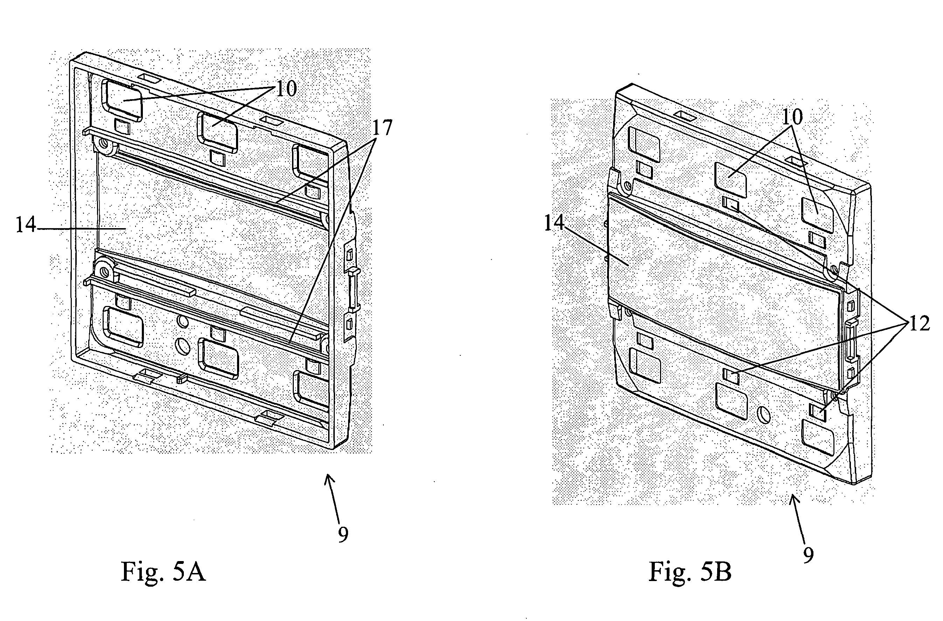

De manière caractéristique et tel que cela est représenté sur les figures 1, 2, 3 et 5, le moyen de protection 9 peut être sous la forme d'une plaque de recouvrement montée de manière fixe sur l'interface de commande et de visualisation 2 et permettant la mise en oeuvre de toutes les fonctions dudit appareillage 1 lorsque le module d'habillage et de commande 4 est retiré, en particulier pendant des travaux, ou avant sa mise en place.

Ainsi l'ensemble des fonctions de l'appareillage 1 sont avantageusement disponibles et actionnables sans que le module d'habillage et de commande 4 soit monté sur l'interface de commande et de visualisation 2 et sans que cette dernière soit accessible et non protégée. Le module d'habillage et de commande 4 peut être monté, de cette manière, sur le boîtier d'appareillage 3 à la fin des travaux, sa fonction étant essentiellement esthétique.

Un autre avantage inhérent à la présence d'un moyen de protection 5 est le fait qu'il est possible d'installer l'ensemble constitué par le boîtier d'appareillage 3, l'interface de commande et de visualisation 2 et le moyen de protection 9 indépendamment du module d'habillage et de commande 4, ce dernier pouvant même être choisi et acheté ultérieurement.

Comme représenté aux figures 1, 2, et 5, la plaque de recouvrement formant le moyen de protection 9 peut présenter au moins une ouverture 10 pour le passage et l'actionnement d'au moins un bouton-poussoir 11 équipant l'interface de commande et de visualisation 2.

Les ouvertures 10 permettent d'actionner les boutons-poussoirs 11 de l'interface de commande et de visualisation 2, même lorsque la plaque de recouvrement formant le moyen de protection 9 est en place.

De manière avantageuse, le cadre 5 du module d'habillage et de commande 4 peut comprendre, en outre, au moins une zone d'affichage 8.

Selon l'invention, la plaque de recouvrement formant le moyen de protection 9 peut présenter également au moins une zone transparente 14 qui, lorsque la plaque de recouvrement 9 est disposée sur la face supérieure 15 de l'interface de commande et de visualisation 2, recouvre au moins une zone d'affichage 16 de ce dernier.

De manière caractéristique, la face supérieure 15 de l'interface de commande et de visualisation 2 peut présenter un ou plusieurs boutons-poussoirs 11 disposés sur une ou plusieurs zones agencées d'un côté ou des deux côtés de la zone d'affichage 16 de ladite interface de commande et de visualisation 2.

De plus, selon l'invention, chaque bouton-poussoir 11 peut être associé à un dispositif de signalisation 13 de l'état du dispositif relié audit bouton-poussoir 11, réalisé sous la forme d'une diode électroluminescente (DEL) montée sur la face supérieure 15 de manière adjacente au bouton-poussoir 11 auquel elle est associée, la plaque de recouvrement formant le moyen de protection 9 présentant, en outre, au moins une fenêtre 12 ou partie de surface transparente ou translucide pour le passage ou la visualisation desdits dispositifs de signalisation 13.

Grâce aux fenêtres 12 et à la zone transparente 14, la visualisation des états des dispositifs commandés est possible. Le moyen de protection 9 permet donc une utilisation de toutes les fonctions de l'appareillage 1, ainsi qu'une protection du circuit électronique de commande.

Dans l'exemple de réalisation représenté aux dessins annexés, trois boutons-poussoirs 11 sont disposés sur le moyen de protection 9, de part et d'autre d'une zone transparente 14 centrale. A chaque bouton-poussoir 11 est associée une diode électroluminescente (DEL) en tant que dispositif de signalisation 13. Ainsi, lors de l'actionnement d'un bouton-poussoir 11, la DEL associée est alimentée ou non, de sorte qu'elle s'illumine ou s'éteint.

La plaque de recouvrement, formant le moyen de protection 9, peut être réalisée à la manière d'une boîte à image. A cet effet, elle peut être constituée en une matière transparente, opacifiée par une peinture formant écran sur toute sa surface à l'exception des surfaces correspondant à la ou aux fenêtres 12 et à la ou aux zones transparentes 14. Cette peinture peut être, par exemple, une peinture de couleur noire appliquée sur une face de ladite boîte de recouvrement 9.

La plaque de recouvrement formant le moyen de protection 9 peut comporter, en outre, sur sa face tournée vers l'interface de commande et de visualisation 2, un moyen de délimitation de la ou des zones transparentes 14 sous forme d'au moins deux parois 17 perpendiculaires à ladite plaque de recouvrement 9, entrant en contact avec la face supérieure 15 de l'interface de commande et de visualisation 2, en position montée de ladite plaque de recouvrement 9, et délimitant entièrement la zone d'affichage 16 de ladite interface de commande et de visualisation 2. Cette délimitation est particulièrement avantageuse en terme de canalisation de la lumière, de telle sorte que la lumière émise par les dispositifs de signalisation 13 n'illumine pas la zone d'affichage 16.

De manière avantageuse, et tel que représenté dans l'exemple de réalisation illustré, la zone d'affichage 16 peut être réalisée par un diffuseur de lumière plan 18 guidant et diffusant la lumière issue de diodes électroluminescentes 19 disposées sur la surface supérieure 15 de manière adjacente à au moins un des côtés latéraux dudit diffuseur de lumière plan 18 vers l'ensemble de la surface de ce dernier. La figure 1 représente, à titre d'exemple, un tel diffuseur de lumière plan 18, diffusant la lumière venant de trois diodes électroluminescentes 19 disposées au niveau d'un coté dudit diffuseur de lumière plan 18.

De manière caractéristique, les parois 17 formant le moyen de délimitation de la ou des zones transparentes 14 de la plaque de recouvrement formant le moyen de protection 9 peuvent s'étendre entre les dispositifs de signalisation 13 et les diodes électroluminescentes 19 pour réaliser un écran entre eux. Ainsi, il n'y a pas d'interférence entre les faisceaux lumineux émis par les dispositifs de signalisation 13 et par les DEL 19, les parois 17 réalisant une compartimentation de la lumière émise.

L'appareillage 1 selon l'invention peut donc être actionné, même lorsque le module d'habillage et de commande 4 n'est pas installé. Les développements qui suivent vont décrire l'interaction entre le module d'habillage et de commande 4 avec le moyen de protection 9 et l'interface de commande et de visualisation 2.

L'appareillage selon l'invention peut présenter, en outre, un cache de protection 25 des boutons-poussoirs 11 contre les décharges électrostatiques, réalisé sous la forme d'une bande plane en matière synthétique munie de bossages 26 de recouvrement desdits boutons-poussoirs 11 et destinée à être disposée sur l'interface de commande et de visualisation 2 avant le montage du moyen de protection 9, les ouvertures 10 du moyen de protection 9 étant dimensionnées pour permettre le passage desdits bossages 26.

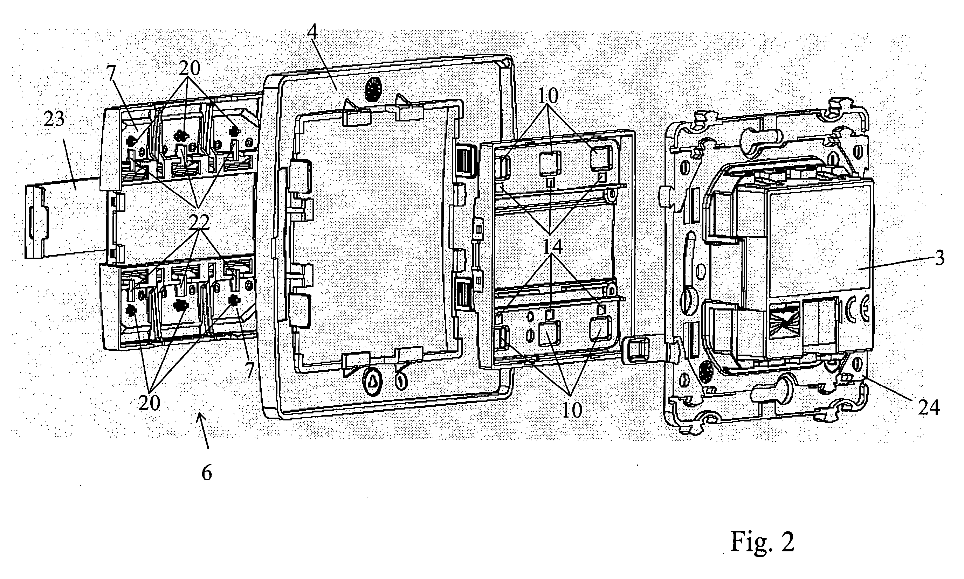

De manière caractéristique, le moyen d'actionnement 6 peut être constitué par une première partie transparente formant la zone d'affichage 8 et par une ou plusieurs parties montées avec possibilité de pivotement sur ladite première partie et formant le ou les actionneurs 7, chaque actionneur 7 étant sous la forme d'une touche présentant un ergot 20 sur sa face inférieure destiné à coopérer, à l'état assemblé de l'appareillage 1, avec un bouton poussoir 11 correspondant de l'interface de commande et de visualisation 2 par l'intermédiaire du cache de protection 25. Une telle disposition est représentée sur les figures 1 et 2. A l'état monté du module d'habillage et de commande 4, les ergots 20 sont situés au-dessus des boutons-poussoirs 11 et une pression sur une touche 7 permet donc d'actionner le bouton-poussoir 11 correspondant.

En outre, chaque touche peut présenter une ouverture 21 de réception d'un guide de lumière 22 affleurant à sa face supérieure et en contact avec le dispositif de signalisation 13 correspondant de l'interface de commande et de visualisation 2. Les guides de lumière 22, plus particulièrement visibles sur les figures 1, 2 et 4, permettent, en effet, de transmettre au niveau de la surface de la touche 7 concernée la lumière émise par le dispositif de visualisation 13 associé au bouton-poussoir 11 actionné par ladite touche 7.

Ainsi, l'appareillage 1 selon l'invention permet d'avoir, aussi bien avant qu'après le montage du module d'habillage et de commande 4, les mêmes informations relatives à l'état des dispositifs commandés et les mêmes possibilités de commande desdits dispositifs.

En outre, l'avantage supplémentaire procuré par cet appareillage 1 est le fait que le moyen de protection 9 protège le boîtier d'appareillage 3 et le circuit de commande, de sorte qu'en phase de chantier il n'est pas nécessaire de prendre des précautions particulières pour éviter d'endommager ledit appareillage 1.

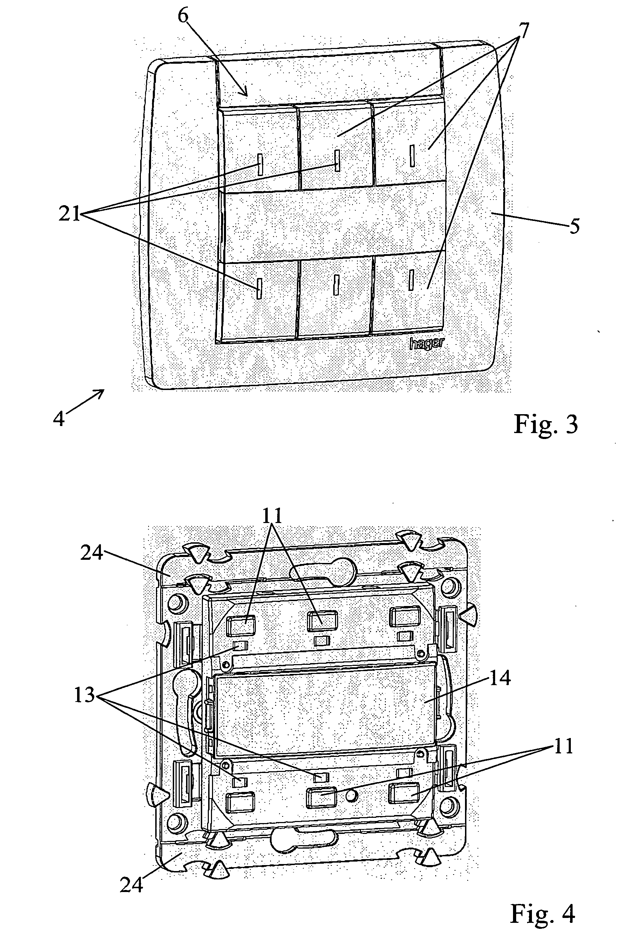

Selon une caractéristique de l'invention, au moins une zone d'affichage 8 du moyen d'actionnement 6 peut être recouverte par un couvercle amovible 23 pour former un ensemble porte-étiquette. Les figures 1 et 4 montrent un tel couvercle amovible, respectivement en position démontée et en position montée. L'étiquette est insérée entre ledit couvercle amovible 23 et la zone d'affichage 8, et peut ainsi être rétro-éclairée par le diffuseur de lumière plan 18 de l'interface de commande et de visualisation 2. Cette étiquette peut, par exemple, représenter des pictogrammes schématisant les dispositifs commandés par ledit appareillage 1.

Selon une caractéristique de l'invention, au moins une zone d'affichage 8 du moyen d'actionnement 6 peut également être un écran à cristaux liquides. Ceci est particulièrement avantageux dans le cas de la commande d'un dispositif de chauffage, par exemple. Dans ce cas, l'écran à cristaux liquides peut afficher la température de la pièce dans laquelle est installé l'appareillage 1 et la température désirée, l'augmentation et la diminution de cette dernière pouvant être commandée par l'actionnement de deux touches 7.

Comme déjà expliqué plus haut, le moyen de protection 9 permet de protéger le circuit de commande et l'appareillage 1 selon l'invention. Or, dans le cas de certains travaux comme, par exemple, la peinture, il peut être utile de protéger la face avant du moyen de protection 9 pendant lesdits travaux. A cet effet, selon une autre caractéristique de l'invention, l'appareillage 1 peut être pourvu, d'un cache de protection amovible 27 sous forme d'une coque de recouvrement de l'ensemble du moyen de protection 9, réalisée en un matériau souple transparent ou translucide et munie de dispositifs 29 de fixation provisoire par pincement coopérant avec la plaque de montage 24 de l'appareillage 1. Les dispositifs 29 de fixation provisoire par pincement peuvent par exemple avantageusement être, de manière connue, des languettes en forme de coin ou être sous forme de broches tronconiques pouvant coopérer avec des évidements de forme correspondante prévus dans la plaque de montage 24.

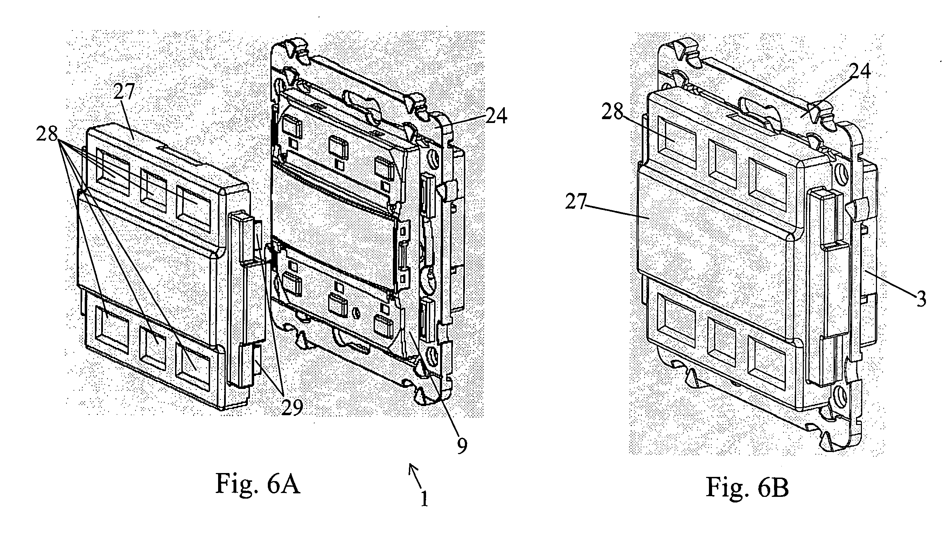

Les figures 6A et 6B représentent un tel cache de protection amovible 27. La coque de recouvrement formant le cache de protection amovible 27 peut être pourvue, au niveau des bossages 26, d'évidements 28 délimitant des zones facilement déformables à faible épaisseur de paroi. Ces évidements 28 permettent d'actionner facilement des boutons-poussoirs 11 tout en assurant une protection parfaite de l'ensemble de l'appareillage 1, en particulier pendant des travaux lors desquels des projections liquides risqueraient d'arriver à l'interface de commande et de visualisation 2 et ainsi de détériorer celle-ci, en particulier par création de défauts électriques.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, selon les revendications.

## Revendications

1. Appareillage électrique de commande d'un système de gestion domotique, destiné à être monté en saillie sur une plaque de montage (24) ou dans une boîte d'encastrement par l'intermédiaire d'une plaque de montage (24), cet appareillage comportant une interface de commande et de visualisation (2), montée sur un circuit électronique de commande disposé dans un boîtier d'appareillage (3), et un module d'habillage et de commande (4), fixé de manière amovible sur ledit boîtier d'appareillage (3) et constitué par un cadre (5) et par un moyen d'actionnement (6) comportant au moins un actionneur (7), appareillage **caractérisé en ce qu'**il comporte, en outre, un moyen de protection (9) de l'interface de commande et de visualisation (2) interposé entre l'interface de commande et de visualisation (2) et le module d'habillage et de commande (4).

2. Appareillage, selon la revendication 1, **caractérisé en ce que** le moyen de protection (9) est sous la forme d'une plaque de recouvrement montée de manière fixe sur l'interface de commande et de visualisation (2) et permettant la mise en oeuvre de toutes les fonctions dudit appareillage (1) lorsque le module d'habillage et de commande (4) est retiré, en particulier pendant des travaux, ou avant sa mise en place.

3. Appareillage, selon la revendication 2, **caractérisé en ce que** la plaque de recouvrement formant le moyen de protection (9) présente au moins une ouverture (10) pour le passage et l'actionnement d'au moins un bouton-poussoir (11) équipant l'interface de commande et de visualisation (2).

4. Appareillage, selon l'une quelconque des revendications 1 à 3, **caractérisé en ce que** le cadre (5) du module d'habillage et de commande (4) comprend, en outre, au moins une zone d'affichage (8).

5. Appareillage, selon les revendications 3 et 4, **caractérisé en ce que** la plaque de recouvrement formant le moyen de protection (9) présente également au moins une zone transparente (14) qui, lorsque la plaque de recouvrement (9) est disposée sur la face supérieure (15) de l'interface de commande et de visualisation (2), recouvre au moins une zone d'affichage (16) de ce dernier.

6. Appareillage, selon la revendication 5, **caractérisé en ce que** la face supérieure (15) de l'interface de commande et de visualisation (2) présente un ou plusieurs boutons-poussoirs (11) disposés sur une ou plusieurs zones agencées d'un côté ou des deux côtés de la zone d'affichage (16) de ladite interface de commande et de visualisation (2).

7. Appareillage, selon la revendication 6, **caractérisé en ce que** chaque bouton-poussoir (11) est associé à un dispositif de signalisation (13) de l'état du dispositif relié audit bouton-poussoir (11), réalisé sous la forme d'une diode électroluminescente (DEL) montée sur la face supérieure (15) de manière adjacente au bouton-poussoir (11) auquel elle est associée, la plaque de recouvrement formant le moyen de protection (9) présentant, en outre, au moins une fenêtre (12) ou partie de surface transparente ou translucide pour le passage ou la visualisation desdits dispositifs de signalisation (13).

8. Appareillage, selon la revendication 7, **caractérisé en ce que** la plaque de recouvrement formant le moyen de protection (9) est constituée en une matière transparente, opacifiée par une peinture formant écran sur toute sa surface à l'exception des surfaces correspondant à la ou aux fenêtres (12) et à la ou aux zones transparentes (14).

9. Appareillage, selon la revendication 8, **caractérisé en ce que** la plaque de recouvrement formant le moyen de protection (9) comporte, en outre, sur sa face tournée vers l'interface de commande et de visualisation (2), un moyen de délimitation de la ou des zones transparentes (14) sous forme d'au moins deux parois (17) perpendiculaires à ladite plaque de recouvrement (9), entrant en contact avec la face supérieure (15) de l'interface de commande et de visualisation (2), en position montée de ladite plaque de recouvrement (9), et délimitant entièrement la zone d'affichage (16) de ladite interface de commande et de visualisation (2).

10. Appareillage, selon l'une quelconque des revendications 5 à 9, **caractérisé en ce que** la zone d'affichage (16) est réalisée par un diffuseur de lumière plan (18) guidant et diffusant la lumière issue de diodes électroluminescentes (19) disposées sur la surface supérieure (15) de manière adjacente à au moins un des côtés latéraux dudit diffuseur de lumière plan (18) vers l'ensemble de la surface de ce dernier.

11. Appareillage, selon les revendications 7, 9 et 10, **caractérisé en ce que** les parois (17) formant le moyen de délimitation de la ou des zones transparentes (14) de la plaque de recouvrement formant le moyen de protection (9) s'étendent entre les dispositifs de signalisation (13) et les diodes électroluminescentes (19) pour réaliser un écran entre eux.

12. Appareillage, selon la revendication 11, **caractérisé en ce que** qu'il présente, en outre, un cache de protection (25) des boutons-poussoirs (11) contre les décharges électrostatiques, réalisé sous la forme d'une bande plane en matière synthétique munie de bossages (26) de recouvrement desdits boutons-poussoirs (11) et destinée à être disposée sur l'interface de commande et de visualisation (2) avant le montage du moyen de protection (9), les ouvertures (10) du moyen de protection (9) étant dimensionnées pour permettre le passage desdits bossages (26).

13. Appareillage, selon la revendication 12, **caractérisé en ce que** le moyen d'actionnement (6) est constitué par une première partie transparente formant la zone d'affichage (8) et par une ou plusieurs parties montées avec possibilité de pivotement sur ladite première partie et formant le ou les actionneurs (7), chaque actionneur (7) étant sous la forme d'une touche présentant un ergot (20) sur sa face inférieure destiné à coopérer, à l'état assemblé de l'appareillage (1), avec un bouton poussoir (11) correspondant de l'interface de commande et de visualisation (2) par l'intermédiaire du cache de protection (25) et **en ce que** chaque touche présente une ouverture (21) de réception d'un guide de lumière (22) affleurant à sa face supérieure et en contact avec le dispositif de signalisation (13) correspondant de l'interface de commande et de visualisation (2).

14. Appareillage, selon la revendication l'une quelconque des revendications 4 à 13, **caractérisé en ce qu'**au moins une zone d'affichage (8) du moyen d'actionnement (6) est recouverte par un couvercle amovible (23) pour former un ensemble porte-étiquette.

15. Appareillage, selon l'une quelconque des revendications 4 à 14, **caractérisé en qu'**au moins une zone d'affichage (8) du moyen d'actionnement (6) est un écran à cristaux liquides.

16. Appareillage, selon l'une quelconque des revendications 1 à 15, **caractérisé en ce que** le moyen de protection (9) présente des moyens de fixation amovible dun cache.

17. Appareillage, selon l'une quelconque des revendications 1 à 16, **caractérisé en ce qu'**il est pourvu, en outre, d'un cache de protection amovible (27) sous forme d'une coque de recouvrement de l'ensemble du moyen de protection (9), réalisée en un matériau souple transparent ou translucide et munie de dispositifs (29) de fixation provisoire par pincement coopérant avec la plaque de montage (24) de l'appareillage (1).

18. Appareillage, selon les revendications 12 et 17, **caractérisé en ce que** la coque de recouvrement formant le cache de protection amovible (27) est pourvue, au niveau des bossages (26), d'évidements (28) délimitant des zones facilement déformables à faible épaisseur de paroi.

## Claims

1. Electric apparatus for controlling a home automation system, designed to be mounted in a projecting manner on an assembly plate (24) or in a housing box by means of an assembly plate (24), said apparatus comprising a control and viewing interface (2), mounted on an electronic control circuit arranged in an apparatus housing (3) and a casing and control module (4), fixed in a detachable manner onto said apparatus housing (3) and consisting of a frame (5) and by an actuation means (6) comprising at least one actuator (7), said apparatus being **characterised in that** it also comprises a means for protecting (9) the control and viewing interface (2) inserted between the control and viewing interface (2) and the casing and control module (4).

2. Apparatus according to claim 1, **characterised in that** the protection means (9) is in the form of a covering plate mounted in a fixed manner on the control and viewing interface (2) and permitting the use of all of the functions of said apparatus (1) when the cover and control module (4) is removed, in particular during construction or prior to its installation.

3. Apparatus according to claim 2, **characterised in that** the covering plate forming the protection means (9) has at least one opening (10) for the passage and actuation of at least one push button (11) on the control and viewing interface (2).

4. Apparatus according to any one of claims 1 to 3, **characterised in that** the frame (5) of the casing and control module (4) also comprises at least one display zone (8).

5. Apparatus according to claims 3 and 4, **characterised in that** the covering plate forming the protection means (9) also has at least one transparent zone (14), which, when the covering plate (9) is arranged on the upper face (15) of the control and viewing interface (2), covers at least one display zone (16) of the latter.

6. Apparatus according to claim 5, **characterised in that** the upper face (15) of the control and viewing interface (2) has one or more push buttons (11) arranged in one or more zones on one side or both sides of the display zone (16) of said control and viewing interface (2).

7. Apparatus according to claim 6, **characterised in that** each push button (11) is connected to a device for signalling (13) the state of the device connected to said push button (11), which device is in the form of an electroluminescent diode mounted on the upper face (15) adjacent to the push button (11) to which it is connected, whereby the covering plate forming the protection means (9) also has at least one window (12) or a transparent or translucent part of the surface for the passage or viewing of said signalling devices (13).

8. Apparatus according to claim 7, **characterised in that** the covering plate forming the protection means (9) consists of a transparent material, made opaque by a paint forming a screen over the entire surface except for the surfaces corresponding to the window or windows (12) and the transparent zone or zones (14).

9. Apparatus according to claim 8, **characterised in that** the covering plate forming the protection means (9) also comprises on its face turned towards the control and viewing interface (2) a means for delimiting the transparent zone or zones (14) in the form of at least two walls (17) perpendicular to the said covering plate (9), which come into contact with the upper face (15) of the control and viewing interface (2) in the mounted position of the said covering plate (9) and entirely delimit the display zone (16) of said control and viewing interface (2).

10. Apparatus according to any one of claims 5 to 9, **characterised in that** the display zone (16) is in the form of a diffuser of plane light (18) which guides and diffuses the light emerging from electroluminescent diodes (19) arranged on the upper face (15) so as to be adjacent to at least one of the lateral sides of said diffuser of plane light (18) towards the entire surface of the latter.

11. Apparatus according to claims 7, 9 and 10, **characterised in that** the walls (17) forming the means for delimiting the transparent zone or zones (14) of the covering plate forming the protection means (9) extend between the signalling devices (13) and the electroluminescent diodes (19) to form a screen between them.

12. Apparatus according to claim 11, **characterised in that** it also has a cover for protecting (25) the push buttons (11) against electrostatic charges, in the form of a planar strip made of synthetic material and provided with protrusions (26) for covering said push buttons (11) and designed to be arranged on the control and viewing interface (2) before the assembly of the protection means (9), whereby the openings (10) of the protection means (9) are dimensioned so as to permit the passage of said protrusions (26).

13. Apparatus according to claim 12, **characterised in that** the actuating means (6) consists of a first transparent part forming the display zone (8) and one or more parts mounted with the ability to pivot on said first part and forming the actuator or actuators (7), each actuator (7) being in the form of a key with a lug (20) on its lower surface designed to cooperate, in the assembled state of the apparatus (1), with a corresponding push button (11) of the control and viewing interface (2) via a protection cover (25), and **in that** each key has an opening (21) for receiving light guide (22) which is flush on its upper face and in contact with the corresponding signalling device (13) of the control and viewing interface (2).

14. Apparatus according to any one of claims 4 to 13, **characterised in that** at least one display zone (8) of the actuating means (6) is covered by a detachable lid (23) for forming a label-holder unit.

15. Apparatus according to any one of claims 4 to 14, **characterised in that** at least one display zone (8) of the actuating means (6) is a liquid crystal screen.

16. Apparatus according to any one of claims 1 to 15, **characterised in that** the protection means (9) has detachable attachment means of a cover.

17. Apparatus according to any one of claims 1 to 16, **characterised in that** there is also a detachable protection cover (27) in the form of a covering shell of the assembly of the protection means (9) made from a transparent or translucent supple material and equipped with devices (29) for temporary attachment by gripping which cooperate with the assembly plate (24) of the apparatus (1).

18. Apparatus according to claims 12 and 17, **characterised in that** the covering shell forming the detachable protection cover (27) is provided at the level of the protrusions (26) with cut-outs (28) which delimit the easily deformable zones with thin walls.

## Patentansprüche

1. Elektrische Steuereinheit zur Hausautomatisierung, die dazu bestimmt ist, auf einer Montageplatte (24) aufgesetzt oder mittels einer Montageplatte (24) in einem Einbaugehäuse montiert zu werden, wobei die genannte Steuereinheit ein Bedienungs- und Anzeigemodul (2), das auf einem in einem Gerätegehäuse (3) angeordneten elektronischen Steuerkreis montiert ist, sowie ein Betätigungs- und Abdeckungsmodul (4) aufweist, das in abnehmbarer Weise an dem genannten Gerätegehäuse (3) befestigt ist und durch einen Rahmen (5) und durch eine Betätigungsvorrichtung (6) gebildet wird, die mindestens ein Betätigungselement (7) aufweist, **dadurch gekennzeichnet, dass** sie außerdem eine zwischen dem Bedienungs- und Anzeigemodul (2) sowie dem Betätigungs- und Abdeckungsmodul (4) eingelegte Schutzvorrichtung (9) aufweist.

2. Steuereinheit nach Anspruch 1, **dadurch gekennzeichnet, dass** die Schutzvorrichtung (9) die Form einer Abdeckplatte aufweist, die in fester Weise auf dem Bedienungs- und Anzeigemodul (2) montiert ist und den Einsatz sämtlicher Funktionen der genannten Steuereinheit (1) ermöglicht, wenn insbesondere bei Arbeiten oder vor der Anbringung das Betätigungs- und Abdeckungsmodul (4) abgenommen wird.

3. Steuereinheit nach Anspruch 2, **dadurch gekennzeichnet, dass** die die Schutzvorrichtung (9) bildende Abdeckplatte mindestens eine Öffnung (10) für das Durchtreten und die Betätigung mindestens eines Druckknopfs (11) aufweist, mit dem das Bedienungs- und Anzeigemodul (2) versehen ist.

4. Steuereinheit nach einem der Ansprüche 1 bis 3, **dadurch gekennzeichnet, dass** der Rahmen (5) des Betätigungs- und Abdeckungsmoduls (4) außerdem mindestens ein Anzeigefeld (8) aufweist.

5. Steuereinheit nach den Ansprüchen 3 und 4, **dadurch gekennzeichnet, dass** die die Schutzvorrichtung (9) bildende Abdeckplatte auch mindestens einen transparenten Bereich (14) aufweist, der, wenn die Abdeckplatte (9) auf der Oberseite (15) des Bedienungs- und Anzeigemoduls (2) angebracht ist, mindestens einen Anzeigebereich des letzteren abdeckt.

6. Steuereinheit nach Anspruch 5, **dadurch gekennzeichnet, dass** die Oberseite (15) des Bedienungs- und Anzeigemoduls (2) einen oder mehrere Druckknöpfe (11) aufweist, die in einem oder mehreren Bereichen angeordnet sind, die auf einer Seite oder auf beiden Seiten des Anzeigebereiches (16) des genannten Bedienungs- und Anzeigemoduls (2) vorgesehen sind.

7. Steuereinheit nach Anspruch 6, **dadurch gekennzeichnet, dass** jeder Druckknopf (11) mit einer Signalvorrichtung (13) für den Zustand der mit dem genannten Druckknopf (11) verbundenen Vorrichtung versehen ist, wobei die genannte Signalvorrichtung in Form einer Elektrolumineszenzdiode (DEL) ausgeführt wird, die auf der Oberseite (15) neben dem Druckknopf (11), zu dem sie gehört, direkt anschließend montiert wird, wobei die die Schutzvorrichtung (9) bildende Abdeckplatte außerdem mindestens ein Fenster (12) oder einen transparenten oder durchscheinenden Teilbereich ihrer Oberfläche für das Durchtreten oder die visuelle Darstellung der genannten Signalvorrichtungen (13) aufweist.

8. Steuereinheit nach Anspruch 7, **dadurch gekennzeichnet, dass** die die Schutzvorrichtung (9) bildende Abdeckplatte aus transparentem Material ausgeführt wird, die mit Ausnahme der dem Fenster oder den Fenstern (12) oder dem oder den transparenten Bereich/Bereichen (14) entsprechenden Flächen auf der gesamten Fläche durch eine eine Abschirmung bildende Farbe abgedunkelt wird.

9. Steuereinheit nach Anspruch 8, **dadurch gekennzeichnet, dass** die die Schutzvorrichtung (9) bildende Abdeckplatte außerdem an ihrer zu dem Bedienungs- und Anzeigemodul (2) hin ausgerichteten Seite ein Mittel zur Abgrenzung des (der) transparenten Bereiches (Bereiche) (14) in Form von mindestens zwei zur genannten Abdeckplatte (9) rechtwinkeligen Wänden (17), die in der montierten Position der genannten Abdeckplatte (9) an der Oberfläche (15) des Bedienungs- und Anzeigemoduls (2) anschließen und den Anzeigebereich (16) des genannten Bedienungs- und Anzeigemoduls (2) vollständig abdecken.

10. Steuereinheit nach einem der Ansprüche 5 bis 9, **dadurch gekennzeichnet, dass** der Anzeigebereich (16) in Form eines planen Lichtdiffusors (18) ausgeführt wird, der das aus den auf der Oberfläche (15) neben mindestens einer seitlichen Kante des planen Lichtdiffusors (18) angeordneten Elektrolumineszenzdioden (19) austretende Licht zur gesamten Oberfläche des letzteren leitet und streut.

11. Steuereinheit nach den Ansprüchen 7, 9 und 10, **dadurch gekennzeichnet, dass** die das Mittel zur Abgrenzung des (der) transparenten Bereiches (Bereiche) (14) bildenden Wände (17) der die Schutzvorrichtung (9) bildenden Abdeckplatte sich zwischen den Signalvorrichtungen (13) und den Elektroluminiszenzdioden (19) erstrecken, um dazwischen eine Abschirmung zu bilden.

12. Steuereinheit nach Anspruch 11, **dadurch gekennzeichnet, dass** sie außerdem eine Schutzabdeckung (25) der Druckknöpfe (11) gegen elektrostatische Entladungen in Form eines planen Bandes aus mit Ausstülpungen (26) zur Abdeckung der genannten Druckknöpfe (11) versehenem Synthetikmaterial aufweist, das dazu bestimmt ist, vor der Montage der Schutzvorrichtung (9) auf dem Bedienungs- und Anzeigemodul (2) angeordnet zu werden, wobei die Öffnungen (10) der Schutzvorrichtung (9) so dimensioniert sind, dass der Durchtritt der genannten Ausstülpungen (26) erlaubt wird.

13. Steuereinheit nach Anspruch 12, **dadurch gekennzeichnet, dass** das Betätigungselement (6) durch einen ersten transparenten, den Anzeigebereich (8) bildenden Teil und durch einen oder mehrere Teile gebildet wird, die mit der Möglichkeit des Drehens auf dem genannten ersten Teil montiert werden und das oder die Betätigungselemente (7) bildet, wobei jedes Betätigungselement (7) die Form einer an ihrer unteren Seite einen Überstand (20) aufweisenden Taste hat, die dazu bestimmt ist, im montierten Zustand der Steuereinheit (1) über die Schutzabdeckung (25) mit einem entsprechenden Druckknopf (11) des Bedienungs- und Anzeigemoduls (2) zusammenzuwirken, und dadurch, dass jede Taste eine Öffnung (21) zur Aufnahme einer Lichtführung (22) aufweist, die an ihrer oberen Seite und mit der entsprechenden Signalvorrichtung (13) des Bedienungs- und Anzeigemoduls (2) auf gleicher Höhe in Kontakt steht.

14. Steuereinheit nach einem der Ansprüche 4 bis 13, **dadurch gekennzeichnet, dass** mindestens ein Anzeigebereich (8) des Betätigungselements (6) durch einen abnehmbaren Deckel (23) abgedeckt wird, um eine Etikettenträgereinheit zu bilden.

15. Steuereinheit nach einem der Ansprüche 4 bis 14, **dadurch gekennzeichnet, dass** mindestens ein Anzeigebereich (8) des Betätigungselements (6) ein LCD-Bildschirm ist.

16. Steuereinheit nach einem der Ansprüche 1 bis 15, **dadurch gekennzeichnet, dass** die Schutzvorrichtung (9) Mittel zur abnehmbaren Befestigung einer Schutzabdeckung aufweist.

17. Steuereinheit nach einem der Ansprüche 1 bis 16, **dadurch gekennzeichnet, dass** sie darüber hinaus versehen ist mit einer abnehmbaren aus transparentem oder durchscheinendem Material ausgeführten Schutzabdeckung (27) in Form einer Abdeckschale der Gesamtheit der Schutzvorrichtung (9), die mit den Vorrichtungen (29) zur provisorischen Befestigung durch Verklemmen versehen ist und mit der Montageplatte (24) der Steuereinheit (1) zusammenwirkt.

18. Steuereinheit nach den Ansprüchen 12 und 17, **dadurch gekennzeichnet, dass** die die abnehmbare Schutzabdeckung (27) bildende Abdeckschale im Bereich der Ausstülpungen (26) mit Auskehlungen (28) versehen ist, die die leicht verformbaren Bereiche mit geringer Stärke der Wand abgrenzen.
